# EUROPÄISCHE PATENTANMELDUNG

(11) **EP 4 571 267 A1**
(43) Veröffentlichungstag der Anmeldung: **18.06.2025**
(21) Anmeldenummer: 24213108.4
(22) Anmeldetag: 14.11.2024
(51) Int. Cl.: G01D 5/244, G01D 5/347, G01D 5/249

(54) **VORRICHTUNG UND VERFAHREN ZUR POSITIONS-, LÄNGEN- ODER WINKELBESTIMMUNG**

(30) Priorität: 11.12.2023 DE 102023134628
(71) Anmelder: SICK AG, 79183 Waldkirch (DE)
(72) Erfinder: Hopp, David, 78166 Donaueschingen (DE); Sellmer, Christian, 78166 Donaueschingen (DE)
(74) Vertreter: Manitz Finsterwald Patent- und Rechtsanwaltspartnerschaft mbB

(57) **Zusammenfassung**

Vorrichtung zur Positions-, Längen-, oder Winkelbestimmung mit einem ersten (14) und einem zweiten Teil (18), welche relativ zueinander bewegbar sind. An dem ersten Teil ist eine Codierung (12) aus einer Vielzahl von aufeinander folgenden Codeabschnitten (22-0 bis 22-9) erster Art und zweiter Art angebracht. An dem zweiten Teil ist eine Auslesevorrichtung (16) zur Erfassung der Codierung angebracht, wobei die Auslesevorrichtung mehrere Sensoren (20-1 bis 20-8) umfasst, welche jeweils zur Erfassung der Codeabschnitte ausgebildet sind und einen entsprechenden Messwert ausgeben. Die Vorrichtung umfasst ferner eine Auswerteinheit (24), welche dazu ausgebildet ist, anhand der besagten Messwerte Übergänge zwischen zusammenhängenden Bereichen von Codeabschnitten erster Art und zusammenhängenden Bereichen von Codeabschnitten zweiter Art zu identifizierten und anhand dieser Übergänge eine Relativposition zwischen dem ersten und dem zweiten Teil zu ermitteln. Die Auswerteinheit hat Zugriff auf mindestens eine Korrekturtabelle, in welcher jedem der Sensoren der Auslesevorrichtung mindestens zwei unterschiedliche Korrekturwerte zugeordnet sind. Die Auswerteinheit ist dazu ausgebildet, zumindest einen Teil dieser Korrekturwerte bei der Ermittlung der Relativposition zwischen dem ersten und dem zweiten Teil zu berücksichtigen. Ferner wird ein entsprechendes Verfahren zur Positions-, Längen-, oder Winkelbestimmung beschrieben.

## Beschreibung

Die vorliegende Erfindung betrifft eine Vorrichtung und ein Verfahren zur Positions-, Längen- oder Winkelbestimmung.

Entsprechende Vorrichtungen umfassen herkömmlich einen ersten und einen zweiten Teil, welche relativ zueinander bewegbar sind. An dem ersten Teil ist eine Codierung aus einer Vielzahl von Codeabschnitten erster und zweiter Art angebracht. An dem zweiten Teil ist eine Auslesevorrichtung zur Erfassung der Codierung angebracht. Die Auslesevorrichtung umfasst mehrere Sensoren, die jeweils zur Erfassung der Codeabschnitte ausgebildet sind und einen entsprechenden Messwert ausgeben. Schließlich umfassen solche Vorrichtungen auch eine Auswerteinheit, welche anhand der erfassten Messwerte Übergänge zwischen zusammenhängenden Bereichen von Codeabschnitten erster und zweiter Art identifiziert und anhand dieser Übergänge eine Relativposition zwischen dem ersten und dem zweiten Teil ermittelt.

Derartige Vorrichtungen werden auch als Encoder bezeichnet und können in einer Vielzahl von technischen Bereichen eingesetzt werden. Beispielsweise können solche Vorrichtungen in Werkzeugmaschinen Verwendung finden, wobei eine Positions- oder Winkelmessung eines Werkzeugs relativ zu dem Werkstück ermöglicht wird. Andere Einsatzbereiche sind Drehwinkelsensoren und Motor-Feedback-Systeme.

Es ist bekannt, dass gewisse Faktoren, seien es nun extrinsische oder intrinsische Faktoren, dazu führen können, dass die Ermittlung der Relativposition mit einem systematischen Fehler behaftet ist. Um diesen Faktoren geeignet Rechnung zu tragen, wird regelmäßig unter Zuhilfenahme eines Referenzsystems eine Korrekturtabelle ermittelt, welche jedem der vorgesehenen Sensoren einen Korrekturwert zuordnet. Jeder dieser Korrekturwerte wird durch die Auswerteinheit vor der Analyse der Messwerte jedem der Messwerte des zugehörigen Sensors verrechnet, um so eine genauere Bestimmung der Relativposition zu erhalten.

Auch wenn diese Herangehensweise bereits eine deutliche Verbesserung bei der Genauigkeit der Ermittlung der Relativpositionen ergibt, gibt es Bedarf an weiteren Verbesserungen hinsichtlich der Genauigkeit.

Vor diesem Hintergrund ist es eine Aufgabe der vorliegenden Erfindung, Vorrichtungen und Verfahren bereitzustellen, welche eine noch genauere Auflösung der Relativposition ermöglichen, als dies herkömmliche Vorrichtungen und Verfahren können.

Diese Aufgabe wird gelöst durch Vorrichtungen und Verfahren entsprechend den unabhängigen Ansprüchen. Vorteilhafte Weiterbildungen sind den abhängigen Ansprüchen zu entnehmen.

Erfindungsgemäß hat die Auswerteinheit einer oben beschriebenen Vorrichtung zur Positions-, Längen-, oder Winkelbestimmung, Zugriff auf mindestens eine Korrekturtabelle, in welcher jedem der Sensoren der Auslesevorrichtung mindestens zwei unterschiedliche Korrekturwerte zugeordnet sind. Die Auswerteinheit ist dazu ausgebildet, zumindest einen Teil dieser Korrekturwerte bei der Ermittlung der Relativposition zwischen dem ersten und dem zweiten Teil zu berücksichtigen.

Mit anderen Worten, es wird für jeden Sensor nicht nur ein einzelner Korrekturwert verwendet, sondern eine Mehrzahl von Korrekturwerten, welche dann auf unterschiedliche Art und Weise mit den Messwerten des jeweiligen Sensors verrechnet werden. Offen ist dabei, ob es sich bei den Korrekturwerten um Werte derselbe Art oder um Korrekturwerte unterschiedlicher Art handelt. Beispielsweise kann die Korrekturtabelle für jeden Sensor einen Sensitivitätskorrekturwert und einen Positionskorrekturwert umfassen. Der Sensitivitätskorrekturwert stellt beispielsweise einen Faktor dar, welcher vor der Binarisierung eines Messwerts mit diesem Multipliziert wird, um Unterschiede in der Sensitivität der Sensoren auszugleichen. Bei dem Positionskorrekturwert kann es sich beispielsweise um einen Wert handeln, der bei einer nachgelagerten Korrektur der Relativposition nach deren Ermittlung aus der Gesamtheit der Messwerte der unterschiedlichen Sensoren, berücksichtigt wird, um Fehlstellungen der Sensoren auszugleichen. Die Mehrzahl von Korrekturwerten für jeden einzelnen Sensor ermöglicht eine umfassende Korrektur unterschiedlichster Quellen für relevante Faktoren bzw. Einflüsse auf die Messwerte, ohne diese auf einen einzelnen Korrekturwert einzudampfen. Dies erlaubt eine deutlich genauere Bestimmung der Relativposition, als dies herkömmlich möglich war.

Bevorzugt sind in der mindestens einen Korrekturtabelle jedem der Sensoren zumindest zwei unterschiedliche Arten von Korrekturwerten zugeordnet.

Dies erlaubt es unterschiedliche Faktoren auf die Genauigkeit der Bestimmung der Relativposition zu berücksichtigen. Wie bereits oben angedeutet, kann sich die Unterschiedlichkeit der Art von Korrekturwerten auf den Ursprung der durch sie zu behebenden Fehler und/oder die konkrete Einbindung dieser in die Ermittlung der Relativposition beziehen. Eine Art von Korrekturwerten kann direkt auf die jeweiligen Messwerte angewendet werden, während eine andere Art von Korrekturwerte lediglich bei einer nachgelagerten Feinbestimmung der Relativposition Beachtung findet. Eine Art von Korrekturwerten kann sich auf Positionierungsfehler beziehen, während eine andere Art von Korrekturwerten dazu dient Schwankungen bei der Sensitivität der Sensoren auszugleichen.

Bevorzugt hat die Auswerteinheit Zugriff auf mindestens zwei solcher Korrekturtabellen, wobei jede der Korrekturtabellen anderen Randbedingungen, wie beispielsweise unterschiedlichen Temperaturbereichen, zugeordnet ist.

Eine Mehrzahl von Korrekturtabellen für unterschiedliche Randbedingungen bzw. extrinsische Faktoren ermöglicht eine klar strukturierte und damit gut handzuhabende Vielzahl von Korrekturwerten in jeder der Korrekturtabellen. Dies ermöglicht eine umfassende und dennoch relativ einfach zu realisierende Umsetzung des Erfindungsgedankens. Konkret ist es möglich, in einem oder mehreren Vorauswahlprozessen anhand von spezifischen Randbedingung (welche beispielsweise über separate Sensoren erfasst werden) die passende Korrekturtabelle auszuwählen, welche dann für die Bestimmung der Relativposition zu verwenden ist. Auch ist es leichter, für neue Randbedingungen eine neue Korrekturtabelle zu erstellen, anstatt eine bereits vorhandene grundlegend zu überarbeiten und/oder zu ergänzen. Die einzelnen Korrekturtabellen können dabei möglichst kurz und übersichtlich gehalten werden.

Bevorzugt ordnet die Korrekturtabelle jedem der Sensoren für zumindest zwei der Übergänge, insbesondere für eine Mehrzahl der Übergänge, und bevorzugt für jeden der Übergänge, welche durch einen entsprechenden Sensor erfasst werden können, mindestens, insbesondere genau, einen Korrektur-wert zuordnet, welcher dem jeweiligen Übergang zugeordnet ist. Die Auswerteinheit ist dabei dazu ausgebildet, bei Detektion eines Übergangs durch einen Sensor den zugehörigen Korrekturwert oder Satz von Korrekturwerten zu ermitteln und bei der Ermittlung der Relativposition zu berücksichtigen.

Mit anderen Worten, den Sensoren werden für unterschiedliche grob ermittelte Relativpositionen unterschiedliche Korrekturwerte zugeordnet, welche dann zur Verfeinerung der Positionsauflösung verwendet werden können. Dies ermöglicht eine besonders feine Auflösung der Relativposition.

Bevorzugt umfassen die Korrekturwerte einfache Positionskorrekturwerte und ist die Auswerteinheit dazu ausgebildet, diese zur Korrektur einer bereits ermittelten Relativposition zu verwenden.

Solche Korrekturwerte sind relativ einfach zu ermitteln und zur Korrektur einer bereits ermittelten groben Relativposition zu verwenden.

Bevorzugt umfassen die Korrekturwerte Funktionen und ist die Auswerteinheit dazu ausgebildet, diese bereits bei der Identifizierung der Übergänge und/oder direkt bei der Ermittlung der Relativposition zu berücksichtigen.

Mit anderen Worten, auch Funktionen, welche von bestimmten Randbedingungen abhängen, können als Korrekturwerte verwendet werden, um eine umfassendere Korrektur vornehmen zu können. Derartige komplexe Korrekturwerte werden bevorzugt bereits zu Identifizierung der Übergänge und/oder einer ersten Ermittlung der Relativposition berücksichtigt.

Bevorzugt ist die Auswerteinheit dazu ausgebildet, basierend auf einem vorbestimmten Muster die Korrekturwerte abzuändern.

Mit anderen Worten, die Auswerteinheit kann die Korrekturtabelle(n) nicht nur auslesen, sondern auch beschreiben. Dies erlaubt seine automatisierte Aktualisierung der Korrekturwerte anhand bestimmter Muster. Beispielsweise kann die Auswerteinheit eine Änderung einzelner Korrekturwerte in einem vorbestimmten von der Betriebsdauer der Vorrichtung abhängigen Muster vornehmen, um Verschleiß einzelner Komponenten, wie beispielsweise der Sensoren, ausreichend Rechnung tragen zu können.

Bevorzugt ist der Erfassungsbereich jedes Sensors auf der zugehörigen Spur der Codierung halb so breit ist, wie die einzelnen Codeabschnitte der zugehörigen Spur der Codierung. Ergänzend oder alternativ dazu ist die Zahl der vorgesehenen Sensoren jedes Satzes von Sensoren zumindest doppelt so groß, wie die Bit-Auflösung der zugehörigen Spur.

Als Bit-Auflösung einer Spur wird die Zahl der aufeinander folgenden Codeabschnitte verstanden, welche mindestens aufgelöst werden muss, um anhand der jeweiligen Spur eine eindeutige zumindest grobe Bestimmung der Relativposition vornehmen zu können. Durch jeder der beiden Merkmale erfolgt eine Überabtastung der jeweiligen Spur der Codierung durch die Sensoren der Auslesevorrichtung, was schließlich eine genauere Bestimmung der Relativposition zwischen dem ersten und dem zweiten Teil ermöglicht.

Bevorzugt handelt es sich bei den Sensoren um optische Sensoren, insbesondere um Photodioden, um magnetische Sensoren, um kapazitive Sensoren oder um induktive Sensoren handelt.

Beispielsweise kann es sich bei den Sensoren um Hall-Sensoren handeln. Derartige Sensoren sind sehr ausgereift und relativ günstig.

Bevorzugt sind der erste und der zweite Teil entweder rein translatorisch oder rein rotatorisch relativ zueinander bewegbar. Die vorgesehenen Sensoren sind jeweils parallel zur Codierung nebeneinander angeordnet.

Wenn die Codierung zwei unterschiedliche Spuren aufweist, sind diese bevorzugt auch parallel zueinander ausgebildet. Eine rein translatorische oder rein rotatorische Relativbewegung ist besonders einfach auszuwerten. Die parallele Anordnung der Sensoren stellt einen gleichen und konstanten Abstand der Sensoren von der Codierung sicher und erleichtert damit die Auswertung der Messwerte. Bevorzugt weisen die Codeabschnitte jeweils eine gleiche Größe und/oder einen gleichen Versatz zueinander auf.

Derartig symmetrische Ausgestaltungen sind besonders einfach zu bilden und auszuwerten.

Die vorliegende Erfindung betrifft auch ein Verfahren zur Positions-, Längen-, oder Winkelbestimmung, bei welchem ein erster und ein zweiter Teil relativ zueinander bewegt werden. Zuvor wird an dem ersten Teil eine Codierung aus einer Vielzahl von Codeabschnitten erster Art und zweiter Art angebracht. Eine Auslesevorrichtung erfasst die Codierung, wobei die Auslesevorrichtung mehrere an dem zweiten Teil angebrachte Sensoren umfasst, welche jeweils zur Erfassung der Codeabschnitte ausgebildet sind und einen entsprechenden Messwert ausgeben. Anhand der erfassten Messwerte werde Übergänge zwischen zusammenhängenden Bereichen von Codeabschnitten erster Art und zusammenhängenden Bereichen von Codeabschnitten zweiter Art identifiziert. Anhand dieser Übergänge wird eine Relativposition zwischen dem ersten und dem zweiten Teil ermittelt. Dabei wird auf eine Korrekturtabelle zugegriffen, in welcher jedem der Sensoren der Auslesevorrichtung mindestens zwei unterschiedliche Korrekturwerte zugeordnet sind. Zumindest ein Teil dieser Korrekturwerte wird bei der Ermittlung der Relativposition zwischen dem ersten und dem zweiten Teil berücksichtigt.

Wie bereits oben zur Vorrichtung beschrieben wurde, erlaubt die Mehrzahl von Korrekturwerten pro Sensor eine umfassendere Korrektur und damit insgesamt eine genauere Bestimmung der Relativposition zwischen dem ersten und dem zweiten Teil.

Die vorstehenden Erläuterungen zur erfindungsgemäßen Vorrichtung gelten für das erfindungsgemäße Verfahren entsprechend. Dies gilt insbesondere für Vorteile und Ausführungsformen.

Nachfolgend wird die Erfindung beispielhaft unter Bezugnahme auf die Zeichnungen beschrieben. Dabei zeigt:
- Fig. 1: eine schematische Ansicht des prinzipiellen Aufbaus einer beispielhaften, erfindungsgemäßen Vorrichtung zur Positions- oder Längenbestimmung;
- Fig. 2: eine schematische Ansicht einer Weiterbildung der Vorrichtung aus Fig. 1; und
- Fig. 3: schematisch die verfeinerte Bestimmung der Relativpositionen anhand der Übergänge zwischen zusammenhängenden Bereichen von identischen Codeabschnitten.

In den Figuren bezeichnen gleiche Bezugszeichen gleiche oder ähnliche Merkmale.

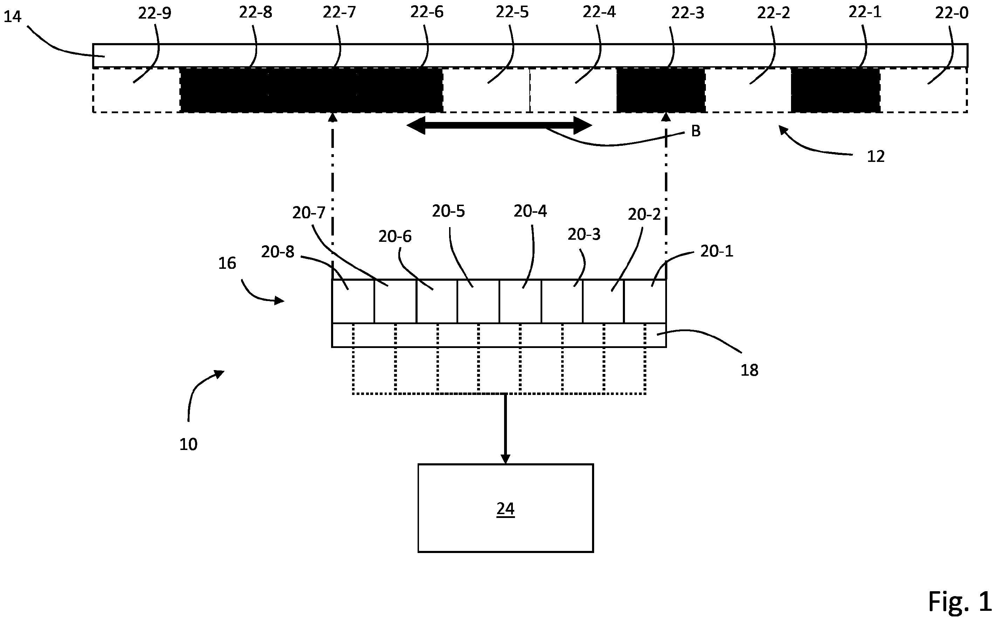

Fig. 1 zeigt schematisch den Aufbau einer erfindungsgemäße Vorrichtung 10 zur Positions- oder Längenbestimmung. Die gezeigte Vorrichtung 10 dient als Encoder, beispielsweise in einem Motor-Feedback-System (nicht gezeigt).

Die Vorrichtung 10 umfasst einen ersten Teil 14, an welchem eine absolute Codierung 12 angebracht ist. Die Vorrichtung 10 umfasst ferner einen zweiten Teil 18, an welchem eine Auslesevorrichtung 16 angebracht ist. Die Codierung 12 und die Auslesevorrichtung 16 sind an dem ersten Teil 14 und an dem zweiten Teil 18 derart befestigt, dass sie sich gemeinsam mit den beiden Teilen 14 und 18 relativ zueinander bewegen. Der erste Teil 14 und der zweite Teil 18 - und damit die Codierung 12 sowie die Auslesevorrichtung 16 - sind im vorliegenden Beispiel rein translatorisch relativ zueinander bewegbar (siehe den Doppelpfeil B). Rein rotatorische Relativbewegungen sind für einen Fachmann auch ohne weiteres umzusetzen.

Die Codierung 12 ist durch eine Vielzahl aufeinander folgender Codeabschnitte 22-0 bis 22-9 erster Art (weiß dargestellt) und zweiter Art (schwarz dargestellt) gebildet. In Fig. 1 sind lediglich zehn solcher Codeabschnitte 22-0 bis 22-9 abgebildet. Die Codierung 12 kann zu den abgebildeten Codeabschnitten 22-0 bis 22-9 links und/oder rechts noch weitere Codeabschnitte umfassen. Dies würde eine Bestimmung der Relativposition zwischen den beiden Teilen 14 und 18 über einen größeren Bereich hinweg ermöglichen, als dies mit den abgebildeten zehn Codeabschnitten 22-0 bis 22-9 möglich wäre.

Die Auslesevorrichtung 16 umfasst vorliegend acht Sensoren 20-1 bis 20-8, beispielsweise in Gestalt von Photodioden, wobei die Sensoren 20-1 bis 20-8 parallel zur Codierung 12 nebeneinander angeordnet sind. Die Sensoren 20-1 bis 20-8 sind auf die Codierung 12 ausgerichtet und zur Erfassung der unterschiedlichen Codeabschnitte 22-0 bis 22-9 der Codierung 12 ausgebildet.

Für eine gleichmäßige Beleuchtung der Codeabschnitte 22-0 bis 22-9 kann eine Lichtquelle (nicht gezeigt) vorgesehen sein, welche zumindest diejenigen Codeabschnitte 22-0 bis 22-9 beleuchtet, welche im Erfassungsbereich der Sensoren 20-1 bis 20-8 (der Bereich zwischen den beiden gestrichelt-doppelgepunkteten Pfeilen) liegen. Jeder der Sensoren 20-1 bis 20-8 empfängt - je nach Art der Codeabschnitte 22-0 bis 22-9 in dessen Erfassungsbereich - eine bestimmte Menge von durch die jeweiligen Codeabschnitte 22-0 bis 22-9 reflektierten oder transmittierten Lichts. Die Sensoren 20-1 bis 20-8 geben daraufhin einen entsprechenden Messwert aus, beispielsweise in Gestalt eines Spannungs- oder Stromwerts.

Zur erleichterten Auswertung der Messwerte der Sensoren 20-1 bis 20-8 sind die Codeabschnitte 22-0 bis 22-9 jeweils räumlich identisch zueinander ausgebildet. Vorliegend wird angenommen, dass der Erfassungsbereich jedes Sensors 20-1 bis 20-8 halb so breit ist, wie die einzelnen Codeabschnitte 22-0 bis 22-9 lang sind. Die Sensoren 20-1 bis 20-8 sind derart auf die Codierung 12 ausgerichtet, dass sie einen zusammenhängenden Erfassungsbereich (siehe den Bereich zwischen den gestrichelt-doppelgepunktet Pfeilen in Fig. 1) auf der Codierung 12 abbilden, welcher in seiner Länge gerade der Länge eines Codeworts der Codierung 12 entspricht. Mit anderen Worten, jeder Codeabschnitt 22-4 bis 22-6, welcher vollkommen im Erfassungsbereich der Sensoren 20-1 bis 20-8 liegt, befindet sich im Erfassungsbereich von zumindest zwei, insbesondere drei, benachbarten Sensoren 20-1 bis 20-8. Dies ermöglicht eine besonders feine Abtastung der Codierung 12 und damit eine besonders genaue Auflösung der Relativposition zwischen dem ersten Teil 14 und dem zweiten Teil 18.

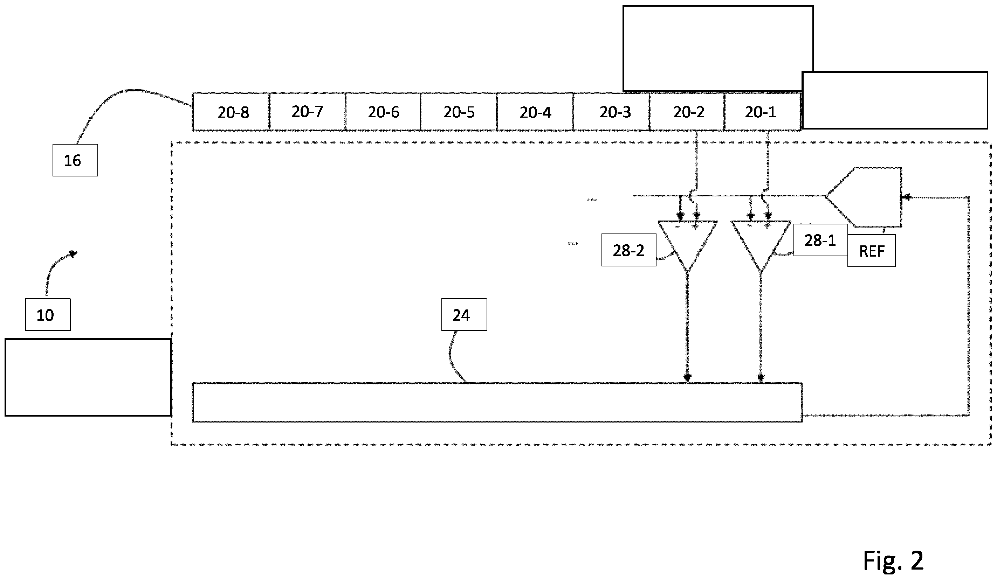

Wie in Fig. 2 angedeutet ist, kann jeder dem der Sensoren 20-1 bis 20-8 ein separater Komparator 28-1, 28-2, etc. nachgeschaltet sein. Jeder dieser Komparatoren 28-1, 28-2, etc. kann eingangsseitig ferner mit einer Referenzeinheit REF verbunden und dazu ausgebildet sein, das von dem zugehörigen Sensor 20-1 bis 20-8 erhaltene Messsignal mit einem von der Referenzeinheit REF erhaltenen Referenzsignal zu vergleichen. Ein hieraus generiertes, insbesondere binäres, Vergleichssignal wird dann zur Analyse an die Auswerteinheit 24 ausgegeben. Mit anderen Worten, es erfolgt keine Digitalisierung der Messwerte anhand eines einzelnen festen Schwellenwerts, wie dies üblich ist, sondern anhand eines variierenden Schwellenwerts. Bei ausreichend schneller Variation des Referenzsignals wird effektiv jeder Messwert anhand einer Mehrzahl von unterschiedlichen Schwellenwerten binarisiert. Die Auswerteinheit 24 kann dann anhand des entsprechenden Vergleichssignals genauer die konkrete Form des Messsignals rekonstruieren und damit die Positionen der Übergänge im Erfassungsbereich der Sensoren 20-1 bis 20-8 sowie die entsprechende Relativposition zwischen dem ersten Teil und dem zweiten Teil genauer bestimmen. Dabei erzeugt die Referenzeinheit insbesondere ein sich, bevorzugt periodisch wiederholendes, zeitlich variierendes Referenzsignal.

Anschaulich gesprochen kann im ersten Komparator 28-1 ein analoger Messwert von dem ersten Sensor 20-1 mit beispielsweise drei unterschiedlichen Referenzwerten verglichen werden, welche durch das Referenzsignal vorgegeben werden. Angenommen ein erster Messwert liegt bei 80% und die drei durch das Referenzsignal definierten Referenzwerte liegen bei 25%, 50% und 75%. Dann gibt der Komparator 28-1 als binarisiertes Vergleichssignal für den ersten Messwert ein "111" an die Auswerteinheit 24 aus, da der erste Messwert höher als alle drei Referenzwerte liegt. Hieraus kann die Auswerteinheit 24 darauf schließen, dass der Messwert und damit die zugehörige Überdeckung bei mindestens 75% liegt. Im Falle eines zweiten Messwerts von beispielsweise 60%, würde das binarisierte Vergleichssignal einer "110" entsprechen. Hieraus kann die Auswerteinheit 24 darauf schließen, dass der zweite Messwert und damit die entsprechende Überdeckung zwischen 50% und 75% liegt. Dies erlaubt es der Auswerteinheit 24 eine Unterscheidung zwischen den Situationen der beiden beispielhaften Mess- bzw. Überdeckungswerte von 80% und 60% vorzunehmen. Basierend darauf kann die Auswerteinheit die Positionen der Übergänge und damit die Relativposition zwischen dem ersten und dem zweiten Teil genauer zu bestimmen. Bei einer herkömmlichen Ausgestaltung mit einem festen Vergleichswert von beispielsweise 50% wäre diese Unterscheidung nicht möglich, da die Auswerteinheit 24 im binarisierten Signal keinen Unterschied auflösen kann. Das binarisierte Signal würde nämlich für beide Messwerte lediglich eine "1" anzeigen.

Alternativ zu diskreten Vergleichssignalen kann das Vergleichssignal auch kontinuierlich verändert werden, wobei beim Umschalten des Komparators das momentan anliegende Vergleichssignal ermittelt wird.

Es ist möglich, ein vordefiniertes periodisches Referenzsignal zu verwenden, oder die Auswerteinheit 24 die genaue Gestalt des Referenzsignals vorgeben zu lassen, um die Positionen der Übergänge insbesondere iterativ besonders genau bestimmen zu können. Konkret könnte die Auswerteinheit 24 bei einer Steuerung des Referenzsignals durch die Auswerteinheit 24 bei einem binarisierten Wert von 1 den Referenzwert vergrößern und bei einem binarisierten Wer von 0 den Referenzwert verkleinern, bis der genaue Messwert ausreichend genau bestimmt ist. Natürlich ist es bei einer derartigen Funktionsweise auch denkbar, die unterschiedlichen Komparatoren jeweils mit spezifischen Referenzsignalen zu versorgen. Dies macht die Auswertung der Messwerte wohl komplizierter, aber auch effizienter und genauer.

Es versteht sich, dass die hier beschriebene Vorrichtung 10 alternativ zu optischen Sensoren 20-1 bis 20-8 und einer optischen Codierung 12 auch mittels magnetischer, kapazitiver oder induktiver Sensoren sowie eine entsprechende Codierung 12 ersetzt werden kann. Auch ergeben sich für einen Fachmann eine Vielzahl an Modifikationen und Abweichungen von den beschriebenen Ausführungsbeispielen, welche hier wohl nicht explizit beschrieben sind, aber dennoch unter den Schutzumfang der Ansprüche fallen.

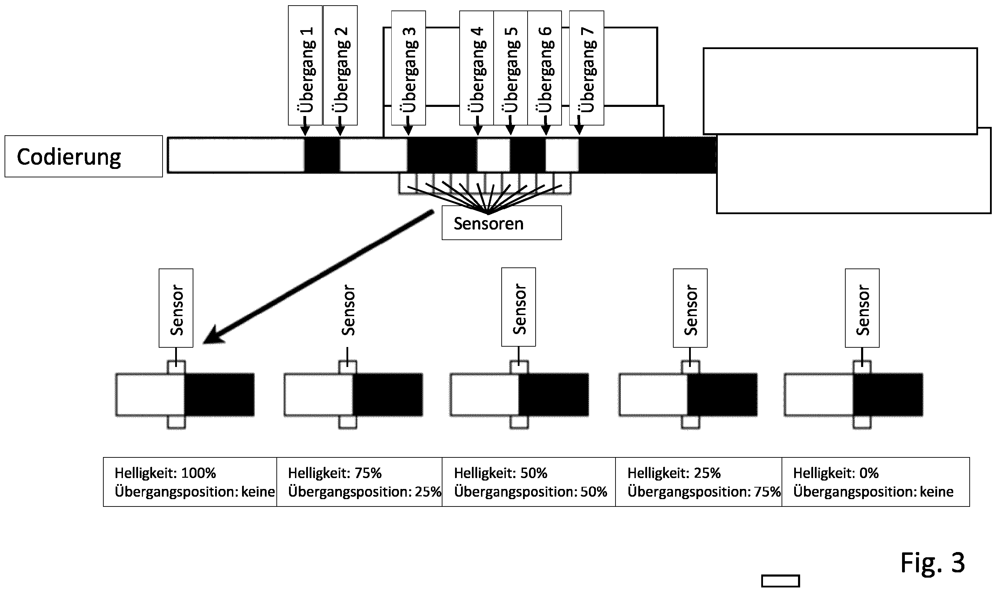

Fig. 3 zeigt eine beispielhafte absolute Codierung aus Codeabschnitten zweier unterschiedlicher Arten, welche von einer Gruppe von Sensoren erfasst werden. Zwischen zusammenhängenden Bereichen von aufeinander folgenden Codeabschnitten derselben Art liegen die Übergänge 1 bis 7. In der gezeigten Relativposition liegen insgesamt vier solcher Übergänge (die Übergänge 3, 4, 5 und 6) im Erfassungsbereich der Sensoren.

Eine zumindest grobe Bestimmung der Relativposition ist durch die Identifizierung des aktuell im Erfassungsbereich liegenden Abschnitts der Codierung möglich, indem die konkrete Abfolge von Codeabschnitten erster und zweiter Art analysiert wird. Diese grobe Bestimmung der Relativposition ist wohlbekannt und wird folglich nicht noch weiter beschrieben.

Eine Verfeinerung der Bestimmung der Relativposition ist dadurch möglich, dass die genaue Relativposition der im Erfassungsbereich der Sensoren liegenden Übergänge in Bezug auf die einzelnen Sensoren ermittelt wird. Konkret variiert der Messwert eines Sensors, in dessen Erfassungsbereich ein entsprechender Übergang liegt, mit der jeweiligen Positionierung des Übergangs entlang des Erfassungsbereichs des zugehörigen Sensors. Im Beispiel aus Fig. 3 gibt der Sensor nicht nur eine Helligkeit von 0% oder 100% als Messwert aus, sondern bei einem Übergang in dessen Erfassungsbereich auch Werte zwischen 0% und 100%. Eine Analyse der Messwerte der Sensoren unter Auflösung dieser Zwischenwerte erlaubt es, die Relativposition zwischen dem ersten und dem zweiten Teil noch genauer zu bestimmen.

Sowohl für die grobe Bestimmung der Relativposition anhand der jeweiligen Codewörter im Erfassungsbereich der Sensoren, als auch für die feine Bestimmung der Relativposition unter Berücksichtigung der Übergänge ist es wichtig, verschiedene unerwünschte Einflüsse auf die Messwerte zu beachten. Solche Einflüsse können nämlich eine systematische Abweichung der bestimmten Relativposition von der realen Relativposition bewirken. Sie wirken dabei besonders stark auf die Feinbestimmung der Relativposition unter Berücksichtigung der Übergänge, da hier kleine Schwankungen in den Messwerten am meisten ins Gewicht fallen. Beispiele für entsprechende Einflüsse sind Variationen in der Sensitivität der Sensoren untereinander und/oder Variationen der Sensitivität aller oder einzelner Sensoren mit wechselnden Randbedingungen wie der Temperatur. Auch können solche Einflüsse, beispielsweise bei optischen Sensoren, Variationen in der Beleuchtung der Codierung sein und/oder gewisse Variationen innerhalb der einzelnen Arten von Codeabschnitten. Beispielsweise können manche der Codeabschnitte zweiter Art dunkler oder heller als andere Codeabschnitte der zweiten Art sein. Auch kann die Schärfe der Übergänge zwischen Codeabschnitten unterschiedlicher Art variieren. Es ist noch eine Vielzahl weiterer solcher Einflüsse denkbar.

Es wurde erkannt, dass es regelmäßig zur Gewährleistung einer spezifischen Genauigkeit bei der Bestimmung der Relativposition nicht ausreicht, für jeden Sensor einen einzelnen Korrekturwert vorzusehen, sondern dass es notwendig ist, für jeden Sensor eine Mehrzahl von unterschiedlichen Korrekturwerten bereitzustellen. Ein gemittelter Gesamtkorrekturwert ist regelmäßig nämlich nicht dazu geeignet, alle Zusammenhänge von Einflüssen zuverlässig abzubilden. Die Mehrzahl von Korrekturwerten für jeden Sensor ist zur erleichterten Handhabung in einer entsprechenden Korrekturtabelle zusammengefasst.

Um unterschiedliche Arten von Einflüssen korrekt abbilden bzw. beseitigen zu können, kann jede Mehrzahl von Korrekturwerten unterschiedliche Arten von Korrekturwerten für jeden Sensor umfassen. Bei einem der Korrekturwerte kann es sich beispielsweise um einen einfachen Positionskorrekturwert handeln, welcher eine identifizierte Variation der Relativposition eines Sensors relativ zur Codierung und/oder zu den übrigen Sensoren ausgleicht. Ein solcher kann beispielsweise zur nachträglichen Korrektur einer bereits herkömmlich bestimmten Relativposition verwendet werden. Es kann auch sinnvoll sein, Korrekturwerte in Gestalt von Funktionen bereitzustellen. Solche komplexen Korrekturwerte ergeben dann unterschiedliche Korrekturen für unterschiedliche Situationen und/oder Randbedingungen. Konkret kann der Korrekturwert beispielsweise eine Funktion in Abhängigkeit von der Temperatur sein. Das heißt der konkrete Korrekturwert ändert sich mit der Temperatur. Solche komplexen Korrekturwerte werden bevorzugt bereits bei der Identifizierung der Übergänge und/oder bei der ersten Ermittlung der groben Relativposition berücksichtigt.

Um sich ändernde Randbedingungen, wie beispielsweise eine schwankende Temperatur, zu berücksichtigen, können auch mehrere Korrekturtabellen gebildet werden, von denen jede einer bestimmten Randbedingung, beispielsweise einem bestimmten Temperaturbereich, oder einer Kombination von Randbedingungen zugeordnet ist. Dies ermöglicht es die einzelnen Korrekturtabellen relativ einfach und übersichtlich zu halten. Auch ist es möglich, für nachträglich als relevant identifizierte Randbedingungen einfach eine neue Korrekturtabelle zu erzeugen, anstatt die übrigen Korrekturtabellen aufwendig zu überarbeiten und/oder zu ergänzen.

Als besonders vorteilhaft wurden Korrekturtabellen identifiziert, welche jedem Sensor für jeden der durch ihn erfassbaren Übergang zumindest einen Korrekturwert zuordnet. Mit anderen Worten, die Korrekturtabelle weist jedem Sensor zumindest einen Korrekturwert zu, welcher von einer ermittelten groben Relativposition zwischen den beiden Teilen abhängt. Ein solcher eignet sich offenkundig lediglich zur Korrektur einer nachgelagerten Feinbestimmung der Relativposition. Beispielsweise kann ein entsprechender Korrekturwert auftretendem Streulicht an bestimmten Übergängen entlang der Codierung geeignet Rechnung tragen.

Es ist möglich, dass die Auswerteinheit 24 nicht nur lesend auf die Korrekturtabelle(n) zugreifen kann, sondern auch schreibend. Mit anderen Worten, die Auswerteinheit 24 kann dazu ausgebildet sein, zumindest einzelne Korrekturwerte anhand vorbestimmter Muster abzuändern bzw. anzupassen. Entsprechende Muster können von unterschiedlichsten Faktoren abhängen. Beispiele für solche Faktoren sind das Lebensalter der Sensoren, die Summe der Strecke zurückgelegter Relativbewegungen, äußere Randbedingungen wie die Temperatur etc. Dies ermöglicht eine dynamische Optimierung der Korrekturwerte und damit eine noch genauere Bestimmung der Relativposition zwischen den beiden Teilen.

Abschließend sei darauf hingewiesen, dass die vorliegende Erfindung auch ein entsprechendes Verfahren zur Positions-, Längen-, oder Winkelbestimmung umfasst. Ein Fachmann kann anhand der obigen Beschreibung und der vorgestellten Ausführungsbeispiele eine Vielzahl an Modifikationen und Kombinationen der beschriebenen Ansätze ersinnen. Auch wenn nicht jede solche Modifikation oder Kombination explizit beschrieben wurde, können diese dennoch unter den Schutzbereich der Ansprüche fallen.

### Bezuaszeichenliste

- 10: Vorrichtung zur Positions-, Längen-, oder Winkelbestimmung
- 12: Codierung
- 14: erster Teil
- 16: Auslesevorrichtung
- 18: zweiter Teil
- 20-1 bis 20-8: Sensoren
- 22-0 bis 22-9: Codeabschnitte
- 24: Auswerteinheit
- 28-1 bis 28-3: Komparatoren
- REF: Referenzeinheit

## Patentansprüche

1. Vorrichtung (10) zur Positions-, Längen-, oder Winkelbestimmung, umfassend:
- einen ersten und einen zweiten Teil (14, 18), welche relativ zueinander bewegbar sind,
- eine an dem ersten Teil (14) angebrachte Codierung (12) aus einer Vielzahl von aufeinander folgenden Codeabschnitten (22-0 bis 22-9) erster Art und zweiter Art,
- eine an dem zweiten Teil (18) angebrachte Auslesevorrichtung (16) zur Erfassung der Codierung (12), wobei die Auslesevorrichtung (16) mehrere Sensoren (20-1 bis 20-8) umfasst, welche jeweils zur Erfassung der Codeabschnitte (22-0 bis 22-9) ausgebildet sind und einen entsprechenden Messwert ausgeben, und
- eine Auswerteinheit (24), welche dazu ausgebildet ist, anhand der besagten Messwerte Übergänge zwischen zusammenhängenden Bereichen von Codeabschnitten (22-0 bis 22-9) erster Art und zusammenhängenden Bereichen von Codeabschnitten (22-0 bis 22-9) zweiter Art zu identifiziert und anhand dieser Übergänge eine Relativposition zwischen dem ersten und dem zweiten Teil (14, 18) zu ermitteln,
**dadurch gekennzeichnet, dass**
die Auswerteinheit (24) Zugriff auf mindestens eine Korrekturtabelle hat, in welcher jedem der Sensoren (20-1 bis 20-8) der Auslesevorrichtung (16) mindestens zwei unterschiedliche Korrekturwerte zugeordnet sind,
wobei die Auswerteinheit (24) dazu ausgebildet ist, zumindest einen Teil dieser Korrekturwerte bei der Ermittlung der Relativposition zwischen dem ersten und dem zweiten Teil (14, 18) zu berücksichtigen.

2. Vorrichtung (10) nach dem vorhergehenden Anspruch 1,
**dadurch gekennzeichnet, dass**
in der mindestens einen Korrekturtabelle jedem der Sensoren (20-1 bis 20-8) zumindest zwei unterschiedliche Arten von Korrekturwerten zugeordnet sind.

3. Vorrichtung (10) nach einem der vorhergehenden Ansprüche,
**dadurch gekennzeichnet, dass**
die Auswerteinheit (24) Zugriff auf mindestens zwei solcher Korrekturtabellen hat, wobei jede der Korrekturtabellen anderen Randbedingungen, wie beispielsweise unterschiedlichen Temperaturbereichen, zugeordnet ist.

4. Vorrichtung (10) nach einem der vorhergehenden Ansprüche,
**dadurch gekennzeichnet, dass**
die Korrekturtabelle jedem der Sensoren (20-1 bis 20-8) für zumindest zwei der Übergänge, insbesondere für eine Mehrzahl der Übergänge, und bevorzugt für jeden der Übergänge, welche durch einen entsprechenden Sensor erfasst werden können, mindestens, insbesondere genau, einen Korrekturwert zuordnet, welcher dem jeweiligen Übergang zugeordnet ist, wobei die Auswerteinheit (24) dazu ausgebildet ist, bei Erfassung eines Übergangs durch einen Sensor (20-1 bis 20-8) den zugehörigen Korrekturwert oder Satz von Korrekturwerten zu ermitteln und bei der Ermittlung der Relativposition zu berücksichtigen.

5. Vorrichtung (10) nach einem der vorhergehenden Ansprüche,
**dadurch gekennzeichnet, dass**
die Korrekturwerte einfache Positionskorrekturwerte umfassen und die Auswerteinheit (24) dazu ausgebildet ist, diese zur Korrektur einer bereits ermittelten Relativposition zu verwenden.

6. Vorrichtung (10) nach einem der vorhergehenden Ansprüche,
**dadurch gekennzeichnet, dass**
die Korrekturwerte Funktionen umfassen und die Auswerteinheit (24) dazu ausgebildet ist, diese bereits bei der Identifizierung der Übergänge und/oder direkt bei der Ermittlung der Relativposition zu berücksichtigen.

7. Vorrichtung (10) nach einem der vorhergehenden Ansprüche,
**dadurch gekennzeichnet, dass**
die Auswerteinheit (24) dazu ausgebildet ist, basierend auf einem vorbestimmten Muster die Korrekturwerte abzuändern.

8. Vorrichtung (10) nach einem der vorhergehenden Ansprüche,
**dadurch gekennzeichnet, dass**
der Erfassungsbereich jedes Sensors (20-1 bis 20-8) auf der Codierung (12) halb so breit ist, wie die einzelnen Codeabschnitte (22-0 bis 22-9), und/oder die Zahl der Sensoren jedes Satzes von Sensoren (20a, 20b) zumindest doppelt so groß, wie die Bit-Auflösung der jeweiligen Spur.

9. Vorrichtung (10) nach einem der vorhergehenden Ansprüche,
**dadurch gekennzeichnet, dass**
es sich bei den Sensoren (20-1 bis 20-8) um optische Sensoren, insbesondere um Photodioden, um magnetische Sensoren, um kapazitive Sensoren oder um induktive Sensoren handelt.

10. Vorrichtung (10) nach einem der vorhergehenden Ansprüche,
**dadurch gekennzeichnet, dass**
der erste und der zweite Teil (14, 18) rein translatorisch oder rein rotatorisch relativ zueinander bewegbar sind,
wobei die vorgesehenen Sensoren (20-1 bis 20-8) jeweils parallel zur Codierung (12) nebeneinander angeordnet sind.

11. Vorrichtung (10) nach einem der vorhergehenden Ansprüche,
**dadurch gekennzeichnet, dass**
die Codeabschnitte (22-0 bis 22-9) jeweils eine gleiche Größe und/oder einen gleichen Versatz zueinander aufweisen.

12. Verfahren (100) zur Positions-, Längen-, oder Winkelbestimmung, bei welchem
- ein erster und ein zweiter Teil (14, 18) relativ zueinander bewegt werden,
- an dem ersten Teil (14) eine Codierung (12) aus einer Vielzahl von Codeabschnitten (22-0 bis 22-9) erster Art und zweiter Art angebracht wird,
- eine Auslesevorrichtung (16) die Codierung (12) erfasst, wobei die Auslesevorrichtung (16) mehrere an dem zweiten Teil (18) angebrachte Sensoren (20-1 bis 20-8) umfasst, welche jeweils zur Erfassung der Codeabschnitte (22-0 bis 22-9) ausgebildet sind und einen entsprechenden Messwert ausgeben,
- anhand der erfassten Messwerte Übergänge zwischen zusammenhängenden Bereichen von Codeabschnitten (22-0 bis 22-9) erster Art und zusammenhängenden Bereichen von Codeabschnitten (22-0 bis 22-9) zweiter Art identifiziert werden und anhand dieser Übergänge eine Relativposition zwischen dem ersten und dem zweiten Teil (14, 18) ermittelt wird,
**dadurch gekennzeichnet, dass**
auf eine Korrekturtabelle zugegriffen wird, in welcher jedem der Sensoren (20-1 bis 20-8) der Auslesevorrichtung (16) mindestens zwei unterschiedliche Korrekturwerte zugeordnet sind,
wobei zumindest ein Teil dieser Korrekturwerte bei der Ermittlung der Relativposition zwischen dem ersten und dem zweiten Teil (14, 18) berücksichtigt wird.
